(19) Europäisches Patentamt
European Patent Office
Office européen des brevets

(11) EP 0 915 057 A2

(12) **EUROPÄISCHE PATENTANMELDUNG**

(43) Veröffentlichungstag:
**12.05.1999 Patentblatt 1999/19**

(51) Int. Cl.$^6$: **C02F 1/28**, C02F 1/58, B01J 20/34, C02F 3/10

(21) Anmeldenummer: **98117092.1**

(22) Anmeldetag: **10.09.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **28.10.1997 DE 19747444**

(71) Anmelder:
**PreussenElektra Aktiengesellschaft
30457 Hannover (DE)**

(72) Erfinder:
- **Pflug, Hans-Dieter, Dr.
60388 Frankfurt (DE)**
- **Henkel, Andreas
63768 Hösbach (DE)**
- **Hein, Martin, Dr.
63796 Kahl (DE)**

(74) Vertreter:
**Stenger, Watzke & Ring
Patentanwälte
Kaiser-Friedrich-Ring 70
40547 Düsseldorf (DE)**

(54) **Verfahren zur selektiven Eliminierung von Ammoniak bzw. Ammonium-Ionen aus einer wässrigen Lösung**

(57) Die Erfindung betrifft ein Verfahren zur selektiven Eliminierung von Ammoniak bzw. Ammonium-Ionen aus einer wässrigen Lösung, insbesondere Abwasser aus einer Rauchgasentschwefelungsanlage. Um ein Verfahren bereitzustellen, mit dem auch geringe Ammoniakkonzentrationen bei gleichzeitigem hohen Überschuß zweiwertiger Ionen wie beispielsweise Calcium- und Magnesium-Ionen wirtschaftlich aus der wässrigen Lösung entzogen werden können, wird vorgeschlagen, daß die wässrige Lösung in einem ersten Arbeitsschritt über bzw. durch ein Adsorptionsbett geleitet wird, das aus mindestens einer Sorte Minerale der Zeolith-Gruppe gebildet ist, und daß in einem zweiten Arbeitsschritt mittels einer Regenerationslösung die in den Mineralen eingelagerten Ammonium-Ionen durch Alkalimetall-Ionen ersetzt werden.

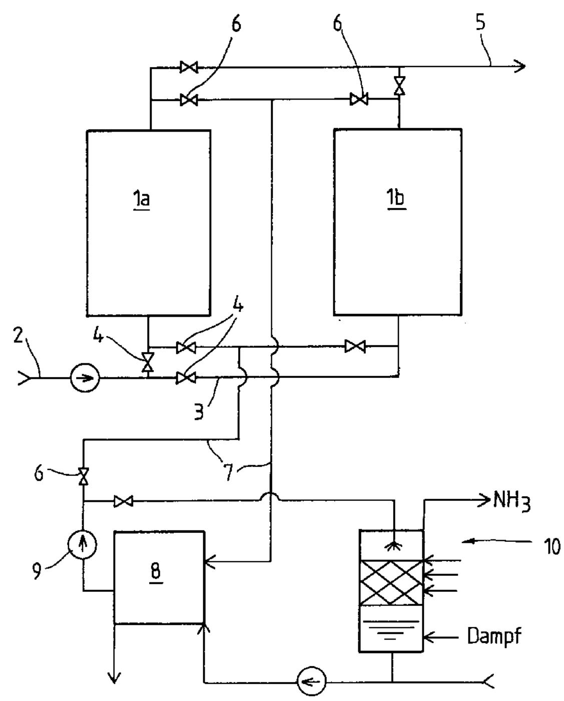


EP 0 915 057 A2

## Beschreibung

Die Erfindung betrifft ein Verfahren zur selektiven Eliminierung von Ammoniak bzw. Ammonium-Ionen aus einer wässrigen Lösung, insbesondere Abwasser aus einer Rauchgasentschwefelungsanlage.

Die Entfernung von Ammoniak bzw. Ammoniak-Ionen aus Abwässern stellt eine in manchen Kraftwerken notwendige Aufgabe dar, da durch Einleitverordnungen in Bezug auf N-Gesamt oder $NH_4$-N die Einleitung von Ammoniak bzw. Ammonium-Ionen in Abwässer durch Grenzwerte festgelegt wird. Probleme treten insbesondere bei Abwässern von Rauchgasentschwefelungsanlagen auf, wenn der $NH_3$-Schlupf einer vorgeschalteten DeNOx-Anlage nur unvollständig mit der Flugasche im Elektrofilter abgeschieden wird.

Aus der Praxis ist es beispielsweise bekannt, Ammoniak aus Abwässern dadurch zu entfernen, daß diese Abwässer über bzw. durch ein Aktivkohlebett geleitet werden, wobei die Ammonium-Ionen beim Durchströmen des Aktivkohlebetts durch Adsorption an die Aktivkohle gebunden werden. Diese bekannte Art der Eliminierung von Ammoniak bzw. Ammonium-Ionen hat sich in der Praxis zwar prinzipiell bewährt, jedoch läßt die Adsorptionsrate bei diesen bekannten Reinigungsverfahren stark nach, wenn neben den Ammonium-Ionen auch starke Überschüsse an zweiwertigen Ionen, insbesondere Calcium- und Magnesium-Ionen, in der wässrigen Lösung vorhanden sind. Bei solchen wässrigen Systemen, die Ammonium-Ionen in relativ geringen Konzentrationen enthalten, ergibt sich für die Reinigung dieser wässrigen Lösungen mit den konventionellen Verfahren ein sehr ungünstiges Kosten/Nutzen-Verhältnis, da in die Investitions- und Betriebskosten die relativ großen Wasservolumina eingehen.

Der Erfindung liegt die **Aufgabe** zugrunde, ein Verfahren zur selektiven Eliminierung von Ammoniak bzw. Ammonium-Ionen aus wässrigen Lösungen zu schaffen, welches eine kostengünstige Entfernung von auch in geringen Konzentrationen vorliegenden Ammonium-Ionen in wässrigen Lösungen ermöglicht.

Die **Lösung** dieser Aufgabenstellung ist erfindungsgemäß dadurch gekennzeichnet, daß die wässrige Lösung in einem ersten Arbeitsschritt über bzw. durch ein Adsorptionsbett geleitet wird, das aus mindestens einer Sorte Minerale der Zeolith-Gruppe gebildet ist, und daß in einem zweiten Arbeitsschritt mittels einer Regenerationslösung die in den Mineralen eingelagerten Ammonium-Ionen durch Alkalimetall-Ionen ersetzt werden.

Durch die Verwendung dieses Zeolith-Adsorptionsbett ist es möglich, die Ammonium-Ionen selektiv in dem Zeolith anzureichern, wodurch eine starke Verminderung der zu behandelnden Wasservolumina ermöglicht wird. Durch die nachfolgende Regeneration der der Adsorption dienenden Zeolith-Minerale wird einerseits die Wirtschaftlichkeit des erfindungsgemäßen Verfahrens erhöht, da das Adsorptionsbett nach der Regeneration wieder zur erneuten Adsorption zur Verfügung steht und andererseits nach der Regeneration des Zeolith-Adsorptionsbett eine konzentrierte Ammonium-Salzlösung erhalten wird, die wirtschaftlich weiterzuverarbeiten ist.

Als besonders geeignete Zeolith-Minerale für die Ausbildung des Adsorptionsbetts haben sich Blätter-Zeolithe und hierbei insbesondere Heulandit als geeignet erwiesen. Gemäß einer praktischen Ausführungsform der Erfindung wird als Zeolith-Mineral Clinoptilolith, eine Varietät des Heulandits, verwendet. Insbesondere die Verwendung der Clinoptilolithe als eine Spezies der Zeolith-Gruppe ist für die Auslegung des Adsorptionsbetts vorteilhaft, da diese zum Austausch von Kationen imstande sind, wobei diese jedoch aus sterischen Gründen bevorzugt Ammonium-Ionen im Vergleich zu zweiwertigen Metall-Ionen aufnehmen. Dies erlaubt die Adsorption von Ammonium-Ionen aus Lösungen mit geringen Konzentrationen, beispielsweise 10 bis 100 mg/l, gegenüber hohen Überschüssen an Calcium- und Magnesium-Ionen, beispielsweise in einem Verhältnis von 1 : 100.

Da der bei der Adsorption stattfindende Platzaustausch zwischen Ammonium- und Alkalimetall-Ionen der geschwindigkeitsbestimmende Schritt der Adsorption ist, der auch nicht durch ein höheres Angebot an Ammoniak bzw. Ammonium-Ionen beschleunigt werden kann, wird gemäß einer praktischen Ausführungsform der Erfindung vorgeschlagen, daß die wässrige Lösung im Kreislauf über bzw. durch das Adsorptionsbett geleitet wird. Daraus ergibt sich die Möglichkeit, Abwässer mit höheren Eingangskonzentrationen an Ammoniak bzw. Ammonium-Ionen durch partielle Rückführung des Ablaufs, d. h. der von Ammoniak bzw. Ammonium-Ionen ganz oder teilweise befreiten wässrigen Lösung, zu verdünnen und dadurch eine zufriedenstellende Abbauleistung zu erreichen.

Zur Regeneration des Adsorptionsbetts wird erfindungsgemäß vorgeschlagen, daß als Regenerationslösung eine Alkalimetall-Ionen in hoher Konzentration enthaltende Lösung verwendet wird. Bei der Regeneration des Adsorptionsbetts werden die in den Zeolith-Mineralen eingelagerten Ammonium-Ionen durch die Alkalimetall-Ionen wieder ersetzt und eine konzentrierte Ammoniumsalzlösung erhalten. Gemäß einer praktischen Ausführungsform dieses ersten Ausführungsbeispiels eines Regenerationsverfahrens wird vorgeschlagen, daß als Regenerationslösung eine 2- bis 4-molare Alkalisalz-Lösung, insbesondere eine Natriumchlorid- oder Kaliumchlorid-Lösung, verwendet wird. Diese Regenerationslösung wird dabei vorteilhafterweise zur Homogenisierung mit geringer Geschwindigkeit im Kreislauf über die zu regenerierenden Minerale geführt, bis sich ein Gleichgewicht zwischen der Ammoniakkonzentration im Regenerat und auf den Mineralen eingestellt hat.

Weiterhin wird mit der Erfindung vorgeschlagen, daß der Volumenstrom der Regenerationslösung etwa 5 bis 20 %, vorzugsweise 10 %, der bei der Beladung durchgesetzten Abwassermenge beträgt, woraus sich eine Anreicherung von Ammonium-Ionen in dem Regenerat ergibt.

Zum Entfernen des Ammoniaks bzw. der Ammoniumsalze aus dem Regenerat wird erfindungsgemäß vorgeschlagen, daß das Regenerat thermisch entgast wird, wobei diese Entgasung unter atmosphärischem Druck oder Unterdruck abläuft. Das Abtrennen des Ammoniaks aus dem Regenerat kann gemäß einer bevorzugten Ausführungsform dadurch verstärkt und beschleunigt werden, daß dem zu entgasenden Regenerat ein Alkalisierungsmittel zugeführt wird. Ein energiesparender und aus verfahrensstechnischen Gesichtspunkten einfacher und wirtschaftlicher Betrieb des erfindungsgemäßen Verfahrens wird weiterhin dadurch erzielt, daß die Regeneration des Adsorptionsbetts und die Entgasung des Regenerats auf demselben Temperaturniveau, vorzugsweise zwischen 25°C und 85°C, durchgeführt werden.

Als besonders vorteilhaft hat es sich weiterhin erwiesen, die Regeneration des Adsorptionsbetts und die Entgasung des Regenerats beim selben pH-Wert, vorzugweise einem pH-Wert von 6 bis 9, durchzuführen.

Gemäß einer zweiten Ausführungsform des erfindungsgemaßen Verfahrens wird als Regenerationslösung eine Suspension verwendet, die Alkalimetall-Ionen sowie ein mit nitrifizierenden Bakterien besiedeltes Trägermaterial enthält. Mittels dieser nitrifizierenden Bakterien (Nitrifikanten) ist ein biologischer Abbau der an den Zeolith-Mineralen gebundenen Ammonium-Ionen möglich. Durch diese nitrifizierenden Bakterien werden die in dem Adsorptionsbett gebundenen Ammonium-Ionen zu Nitrit bzw. Nitrat oxidiert und aufgrund der in der Suspension enthaltenen Alkalimetall-Ionen durch ein Äquivalent an Alkalimetall-Ionen ersetzt. Gemäß einer praktischen Ausführungsform wird bei diesem Regenerationsverfahren als Alkalisierungsmittel ein Alkalihydrocarbonat verwendet. Die Verwendung von Alkalihydrocarbonaten hat den Vorteil, daß sie einerseits zur Deckung des Bedarfs an Alkalimetall-Ionen beitragen und andererseits durch die von ihnen freigesetzte Kohlensäure als Kohlenstoffquelle für die Nitrifikanten dienen.

Weiterhin wird vorgeschlagen, daß die Suspension mit geringer Geschwindigkeit im Kreislauf über die zu regenerierenden Minerale geführt wird, wobei die Suspension mit Salz bis zur bakteriellen Toleranzschwelle bzw. Sättigung fällbarer Begleitstoffe, wie beispielsweise Magnesiumsalze, angereichert werden kann.

Gemäß einer praktischen Ausführungsform wird vorgeschlagen, als mit nitrifizierenden Bakterien besiedeltes Trägermaterial Belebtschlamm aus kommunalen Kläranlagen zu verwenden. Zur verfahrenstechnischen Behandlung der die nitrifizierenden Bakterien enthaltenen Suspension hat es sich als vorteilhaft erwiesen, daß die nitrifizierenden Bakterien ausgehend von dem Belebtschlamm auf ein filtergängiges Material, vorzugsweise Kaolin, umgesiedelt werden. Um eine einwandfreie Trennung der Nitrifikanten vom ursprünglichen Belebtschlamm zu erzielen, ist es vorteilhaft, die umzusiedelnden Nitrifikanten zunächst auf ein flotierbares, hydrophobes Material als Zwischenträger umzusiedeln. Als besonders geeignetes Material für diesen Zwischenträger hat sich Kunstharz, insbesondere Polyurethan in der Form von Polyurethan-Schnitzeln, erwiesen.

Weitere Merkmale und Vorteile der Erfindung ergeben sich aus der nachfolgenden Beschreibung der zugehörigen Zeichnung, in der der Aufbau einer Anlage zur Durchführung des erfindungsgemäßen Verfahrens zur selektiven Eliminierung von Ammoniak bzw. Ammonium-Ionen aus einer wassrigen Lösung in einem Verfahrensschema dargestellt ist.

Das dargestellte Verfahrensschema zeigt eine aus zwei Adsorptionssäulen 1a und 1b bestehende Anlage zum kontinuierlichen Betrieb des aus einer Beladungsphase und einer Regenerationsphase bestehenden Verfahrens.

Beide Adsorptionssäulen 1a und 1b sind mit einem nicht näher dargestellten Adsorptionsbett gefüllt, das aus mindestens einer Sorte Minerale der Zeolith-Gruppe besteht.

Über einen Zulauf 2 wird die zu reinigende, Ammoniak bzw. Ammoium-Ionen enthaltende wässrige Lösung den beiden Adsorptionssäulen 1a und 1b zugeführt. Die Aufteilung des Zulaufs auf die Adsorptionssäule 1a oder die Adsorptionssäule 1b erfolgt durch Schaltung der in den Zulaufleitungen 3 angeordneten Ventile 4. Nach dem Durchströmen einer der Adsorptionssäulen 1a, 1b kann die von Ammoniak bzw. Ammonium-Ionen gereinigte wässrige Lösung einem Ablauf 5 zugeleitet werden. In dem dargestellten Ausführungsbeispiel ist aus Gründen einer besseren Übersicht nicht zusätzlich die Möglichkeit dargestellt, bei der die zu reinigende wässrige Lösung nach dem Verlassen der Adsorptionssäule 1a oder 1b im Kreislauf geführt wird, um die Konzentration an Ammoniak bzw. Ammonium-Ionen in der zulaufenden, zu reinigenden Lösung zu verringern.

Um einen kontinuierlichen Betrieb der Anlage zu gewährleisten, besteht diese dargestellte Anlage aus zwei Adsorptionssäulen 1a und 1b, so daß, sobald beispielsweise die Adsorptionssäule 1a keine ausreichende Adsorptionsleistung mehr aufweist, d. h. die Ammoniak- bzw. Ammonium-Ionenkonzentration im Ablauf 5 zu hoch ist, werden die Ventile 4 in den Zulaufleitungen 3 so umgestellt, daß die zu reinigende wässrige Lösung nun der Adsorptionssäule 1b zugeführt wird.

Zur Regeneration des mit Ammonium-Ionen beladenen Adsorptionsbetts in der Adsorptionssäule 1a wird die Adsorptionssäule 1a durch Schalten der Ventile 6 in Regenerationsleitungen 7 mit einem Regenerationslösungstank 8 verbunden.

Beim dargestellten Ausführungsbeispiel ist die Regeneration mittels einer Alkalimetall-Ionen in hoher Konzentration enthaltenden Lösung dargestellt. Die Regenerationslösung wird mittels einer Pumpe 9 über die Regenerationsleitungen 7 der zu regenerierenden Adsorptionssäule 1a zugeführt. Das die Adsorptionssäule 1a verlassende Regenerat wird beim dargestellten Ausführungsbeispiel im Kreislauf geführt, so daß es nach dem Verlassen der

Adsorptionssäule 1a wieder in den Regenerationslösungstank 8 gelangt.

Zum Aufarbeiten der aufgrund der Regeneration Ammoniumsalze in hoher Konzentration enthaltenden Regenerationslösung ist es notwendig, der Regenerationslösung Ammoniak zu entziehen. Dieses Abscheiden des Ammoniaks aus der Regenerationslösung erfolgt in einem zusätzlichen Entgaser 10, in dem mittels thermischer Entgasung bei Atmosphärendruck oder Unterdruck der Regenerationslösung durch Zugabe eines Alkalisierungsmittels Ammoniak entzogen wird.

Sobald die Adsorptionsleistung der Adsorptionssäule 1b nachläßt, wird der Zulauf der zu reinigenden Lösung durch Schaltung der Ventile 4 wieder so geleitet, daß die zu reinigende Lösung in die Adsorptionssäule 1a gelangt. Nunmehr kann durch entsprechende Schaltung der Ventile 6 die Adsorptionssäule 1b mittels der Regenerationslösung wieder aufbereitet werden.

Die in den einzelnen Arbeitsstufen des Verfahrens ablaufenden Stoffumsätze bzw. Reaktionen lassen sich wie folgt darstellen, wobei Z für Zeolith steht:

<u>Beladungsphase</u>

$$NH_4^+Cl^- + Na^+Z^- \rightarrow NH_4^+Z^- + Na^+Cl^-$$

<u>Regeneration</u>

$$Na^+Cl^- + NH_4^+Z^- \rightarrow Na^+Z^- + NH_4^+Cl^- \text{ conc.}$$

<u>Entgasung</u>

$$NH_4^+Cl^- + NaOH \rightarrow \begin{cases} NH_3 \uparrow \\ H_2O \end{cases} + Na^+Cl^-$$

Der technische und wirtschaftliche Nutzen des Einsatzes von natürlichen Zeolithen, wie beispielsweise Clinoptilolith, liegt in der Möglichkeit, Ammoniak in geringer Konzentration - beispielsweise im Trinkwasser - auch in Anwesenheit von stark überschüssigen zweiwertigen Ionen, wie beispielsweise Calcium- und Magnesium-Ionen, anzureichern und mit einem wesentlich geringeren Anlagen- und Betriebskostenaufwand zu eliminieren, als dies bei konventionellen Verfahren der Fall ist.

**<u>Bezugszeichenliste</u>**

| | |
|---|---|
| 1a | Adsorptionssäule |
| 1b | Adsorptionssäule |
| 2 | Zulauf |
| 3 | Zulaufleitung |
| 4 | Ventil |
| 5 | Ablauf |
| 6 | Ventil |
| 7 | Regenerationsleitung |

8 Regenerationslösungstank

9 Pumpe

10 Entgaser

**Patentansprüche**

1. Verfahren zur selektiven Eliminierung von Ammoniak bzw. Ammonium-Ionen aus einer wässrigen Lösung, insbesondere Abwasser aus einer Rauchgasentschwefelungsanlage,
**dadurch gekennzeichnet,**
daß die wässrige Lösung in einem ersten Arbeitsschritt über bzw. durch ein Adsorptionsbett geleitet wird, das aus mindestens einer Sorte Minerale der Zeolith-Gruppe gebildet ist, und daß in einem zweiten Arbeitsschritt mittels einer Regenerationslösung die in den Mineralen eingelagerten Ammonium-Ionen durch Alkalimetall-Ionen ersetzt werden.

2. Verfahren nach Anspruch 1, dadurch gekennzeichnet, daß als Zeolith-Mineral ein Blätter-Zeolith, insbesondere Heulandit, verwendet wird.

3. Verfahren nach Anspruch 1 oder 2, dadurch gekennzeichnet, daß als Zeolith-Mineral Clinoptilolith verwendet wird.

4. Verfahren nach mindestens einem der Ansprüche 1 bis 3, dadurch gekennzeichnet, daß die wässrige Lösung im Kreislauf über bzw. durch das Adsorptionsbett geleitet wird.

5. Verfahren nach mindestens einem der Ansprüche 1 bis 4, dadurch gekennzeichnet, daß als Regenerationslösung eine Alkalimetall-Ionen in hoher Konzentration enthaltende Lösung verwendet wird.

6. Verfahren nach Anspruch 5, dadurch gekennzeichnet, daß als Regenerationslösung eine 2- bis 4-molare Alkalisalz-Lösung, insbesondere Natriumchlorid- oder Kaliumchlorid-Lösung, verwendet wird.

7. Verfahren nach Anspruch 5 oder 6, dadurch gekennzeichnet, daß die Regenerationslösung im Kreislauf über die zu regenerierenden Minerale geführt wird, bis sich ein Gleichgewicht zwischen der Ammoniakkonzentration im Regenerat und auf den Mineralen eingestellt hat.

8. Verfahren nach mindestens einem der Ansprüche 5 bis 7, dadurch gekennzeichnet, daß der Volumenstrom der Regenerationslösung etwa 5 % bis 20 %, vorzugsweise 10 %, der bei der Beladung durchgesetzten Abwassermenge beträgt.

9. Verfahren nach mindestens einem der Ansprüche 5 bis 8, dadurch gekennzeichnet, daß das mit Ammoniak angereicherte Regenerat zum Abtrennen des Ammoniaks thermisch entgast wird.

10. Verfahren nach Anspruch 9, dadurch gekennzeichnet, daß dem Regenerat vor der Entgasung ein Alkalisierungsmittel zugeführt wird.

11. Verfahren nach Anspruch 9 oder 10, dadurch gekennzeichnet, daß die Regeneration und die Entgasung auf demselben Temperaturniveau, vorzugsweise zwischen 25°C und 85°C, durchgeführt werden.

12. Verfahren nach mindestens einem der Ansprüche 9 bis 11, dadurch gekennzeichnet, daß die Regeneration und die Entgasung bei demselben pH-Wert, vorzugsweise einem pH-Wert zwischen 6 und 9, durchgeführt werden.

13. Verfahren nach mindestens einem der Ansprüche 1 bis 4, dadurch gekennzeichnet, daß als Regenerationslösung eine Suspension verwendet wird, die Alkalimetall-Ionen sowie ein mit nitrifizierenden Bakterien besiedeltes Trägermaterial enthält.

14. Verfahren nach Anspruch 13, dadurch gekennzeichnet, daß als Alkalisierungsmittel ein Alkalihydrocarbonat verwendet wird.

15. Verfahren nach Anspruch 13 oder 14, dadurch gekennzeichnet, daß die Suspension im Kreislauf über die zu regenerierenden Minerale geführt wird.

**16.** Verfahren nach mindestens einem der Ansprüche 13 bis 15, daß als mit den nitrifizierenden Bakterien besiedeltes Trägermaterial Belebtschlamm aus kommunalen Kläranlagen verwendet wird.

**17.** Verfahren nach Anspruch 16, dadurch gekennzeichnet, daß die nitrifizierenden Bakterien von dem Belebtschlamm auf ein filtergängiges Material, vorzugsweise Kaolin, umgesiedelt werden.

**18.** Verfahren nach Anspruch 17, dadurch gekennzeichnet, daß für die Umsiedlung der nitrifizierenden Bakterien ein flotierbares, hydrophobes Material, vorzugsweise ein Kunstharz, insbesondere Polyurethan, als Zwischenträger verwendet wird.

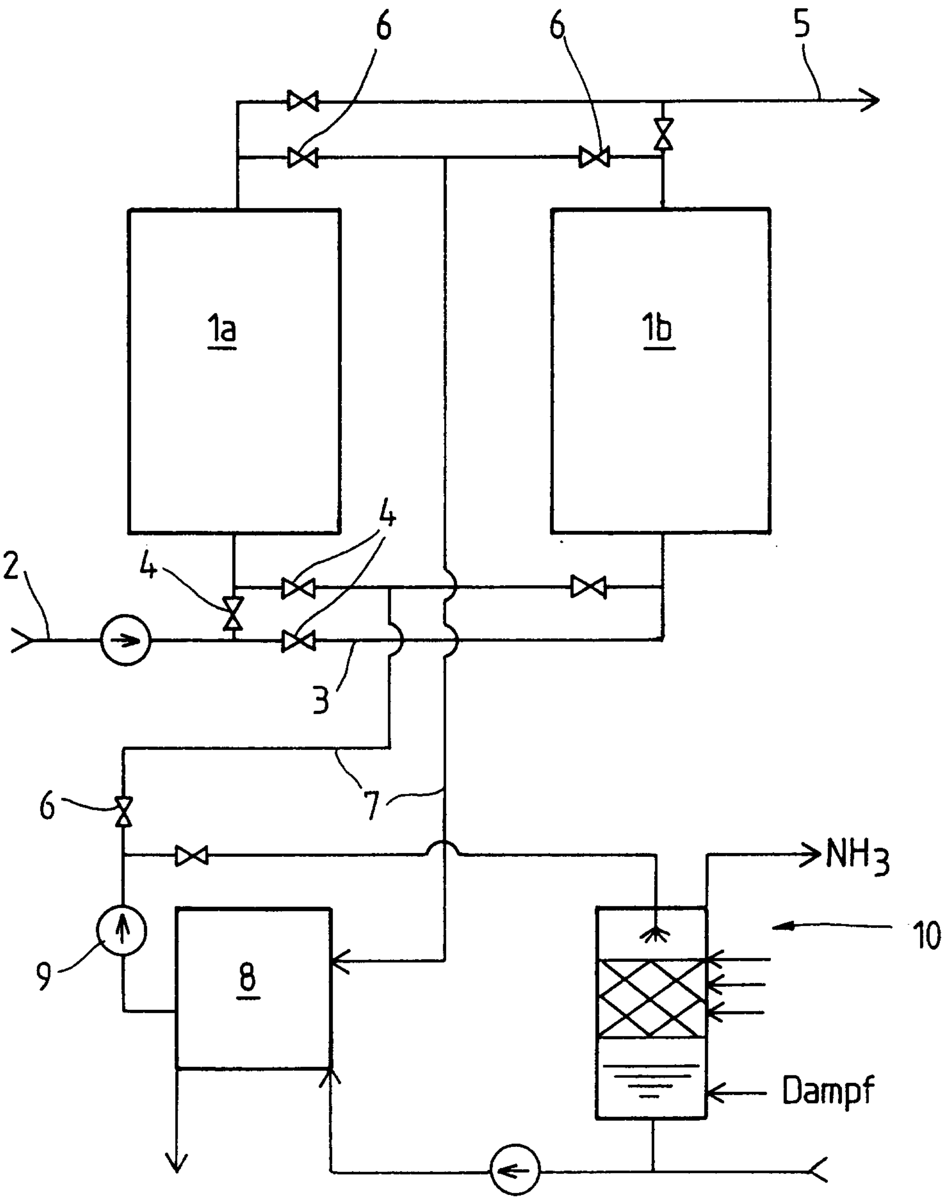
6
6
5
1a
1b
4
2
4
3
6
7
7
NH3
9
8
10
Dampf